# EUROPÄISCHE PATENTSCHRIFT

(11) **EP 3 590 791 B1**
(45) Veröffentlichungstag und Bekanntmachung des Hinweises auf die Patenterteilung: **20.07.2022**
(21) Anmeldenummer: 19188108.5
(22) Anmeldetag: 09.11.2016
(51) Int. Cl.: B62D 15/02, B60W 30/18, G01C 21/30, G05D 1/02, H04N 7/18

(54) **VERFAHREN UND VORRICHTUNG ZUM AUTOMATISIERTEN FAHREN EINES KRAFTFAHRZEUGES**
METHOD AND DEVICE FOR AUTOMATED DRIVING OF A MOTOR VEHICLE
PROCÉDÉ ET DISPOSITIF DE CONDUITE AUTOMATISÉE D'UN VÉHICULE AUTOMOBILE

(30) Priorität: 02.12.2015 DE 102015224008
(43) Veröffentlichungstag der Anmeldung: 08.01.2020
(62) Teilanmeldung aus: 16798430.1
(73) Patentinhaber: VOLKSWAGEN AKTIENGESELLSCHAFT, 38440 Wolfsburg (DE)
(72) Erfinder: Rösler, Bernd, 38524 Sassenburg (DE); Großjohann, Simon, 38442 Wolfsburg (DE); Homeier, Kai, 30453 Hannover (DE)

(56) Entgegenhaltungen:
- EP-A1- 2 253 936
- DE-A1-102004 052 127
- JP-A- 2009 214 787
- US-A1- 2004 201 672
- US-A1- 2008 061 952

## Beschreibung

Verfahren und Vorrichtung zum automatisierten Fahren eines Kraftfahrzeuges Die Erfindung betrifft ein Verfahren und eine Vorrichtung zum automatisierten Fahren eines Kraftfahrzeuges.

Ein solches Verfahren bzw. eine solche Vorrichtung ist beispielsweise aus der US 2010/0228420 A1 bekannt. Dabei umfasst die Vorrichtung eine Kamera und eine Auswerteeinheit zur Auswertung der von der Kamera erfassten Daten. Mittels der Kamera werden dabei Fahrbahnmarkierungen erfasst und daraus Fahrstreifen ermittelt. Anhand der Eigenposition des Kraftfahrzeugs in Relation zum Fahrstreifen kann dann das Kraftfahrzeug durch automatische Lenkbefehle im Fahrstreifen zentriert werden oder auch ein automatisierter Fahrspurwechsel in einen benachbarten Fahrstreifen vorgenommen werden.

Aus der EP 2 253 936 A1 ist ein Verfahren zur Bestimmung der aktuellen Position eines Kraftfahrzeugs bekannt, wobei Fahrspuren erfasst werden, wobei an Verzweigungspunkten die Parallelität von Fahrspuren erfasst wird.

Aus der US 2008/0061952 A1 ist ein Verfahren zur Fahrerinformation bekannt, wobei eine Warnung für den Fahrer erzeugt wird, wenn das Fahrzeug droht, die Fahrspur zu verlassen bzw. die Fahrspur verlässt, wobei die Warnung auf der Basis von Fahrbahnrandlinien ermittelt wird, wobei bei mehreren erkannten Linien die fahrzeugentferntere Linie zur Ermittlung der Warnung ausgewählt wird. Dabei wird die fahrzeugentferntere Linie für eine vorgegebene Fahrstrecke und/oder Fahrzeit der Warnung zugrunde gelegt. Das Dokument US 2008/061952 A1 zeigt die Merkmale des Oberbegriffs der Ansprüche 1 und 6.

Der Erfindung liegt das technische Problem zugrunde, ein Verfahren zum automatisierten Fahren eines Kraftfahrzeugs zur Verfügung zu stellen, bei der die Gefahr von fehlerhaften Fahrspurwechseln reduziert wird. Ein weiteres technisches Problem ist die Schaffung einer Vorrichtung zum automatisierten Fahren.

Die Lösung des technischen Problems ergibt sich durch ein Verfahren mit den Merkmalen des Anspruchs 1 sowie eine Vorrichtung mit den Merkmalen des Anspruchs 6. Weitere vorteilhafte Ausgestaltungen der Erfindung ergeben sich aus den Unteransprüchen.

Das Verfahren zum automatisierten Fahren eines Kraftfahrzeugs erfolgt mittels mindestens einer Kamera und einer Auswerteinheit zur Auswertung der von der Kamera erfassten Daten, wobei mittels der Kamera Fahrbahnmarkierungen erfasst werden und daraus Fahrstreifen ermittelt werden. Dabei werden Änderungen der Fahrbahnmarkierungen, die zur Ermittlung eines neuen Fahrstreifens führen würden, über eine vorgegebene Entfernung beobachtet, wobei der neue Fahrstreifen nur übernommen wird, wenn die geänderte Fahrbahnmarkierung über die vorgegebene Entfernung erfasst wurde. Somit wird sichergestellt, dass ein neuer Fahrstreifen erst übernommen wird, wenn dieser lange genug erfasst wurde. Somit wird verhindert, dass beispielsweise kurzfristige Störungen der Kamera oder Beschädigungen der Fahrbahnmarkierungen nicht zu falschen Fahrstreifenerfassungen führen. Die Entfernung stellt dabei das Produkt von Fahrzeuggeschwindigkeit und Zeit dar, sodass die Übernahme bei größeren Geschwindigkeiten schneller erfolgt. Dabei sei angemerkt, dass die Änderung der erfassten Fahrbahnmarkierung beispielsweise darin bestehen kann, dass eine zuvor durchgezogene oder gestrichelte Fahrbahnmarkierung verschwunden ist oder eine durchgezogene Fahrbahnmarkierung zu einer gestrichelten Fahrbahnmarkierung wird oder umgekehrt. Weiter sei angemerkt, dass neben der Kamera noch weitere Sensoriken wie beispielsweise Radar- oder Lidarsensoriken vorhanden sein können. Des Weiteren kann auch eine digitale Straßenkarte vorhanden sein. Mittels des Verfahrens kann aber zuverlässig ein neuer Fahrstreifen ermittelt werden, auch wenn die anderen Sensoriken oder die digitale Straßenkarte ausfallen.

Dabei ist es vorgesehen, dass die Entfernung abhängig von der Art einer erfassten Fahrbahnmarkierung gewählt wird. Beispielsweise kann bei durchgezogenen Fahrbahnmarkierungen die Entfernung kleiner gewählt werden, da die Gefahr von Fehlerfassungen geringer ist. Weiter kann insbesondere bei dem linken Fahrstreifen vorgesehen sein, dass bei der zusätzlichen Erfassung von anderen Kraftfahrzeugen die Entfernung ebenfalls reduziert wird.

Dabei kann vorgesehen sein, dass die Entfernung für die Übernahme eines Fahrstreifens für einen linken und einen rechten Fahrstreifen unterschiedlich gewählt wird. Im Falle eines Rechtsverkehrs wird dabei die Entfernung für einen rechten Fahrstreifen größer als für den linken Fahrstreifen gewählt, da dort die Gefahr von Fehlerfassungen größer ist, was nachfolgend noch näher erläutert wird.

Erfindungsgemäß wird die Entfernung größer gewählt als die Länge eines temporären Fahrstreifens. Dabei wird unter einem temporären Fahrstreifen insbesondere eine Auf- und Abfahrt oder ein Autobahnkreuz verstanden. Bei diesen wird in einer bestimmten Entfernung von beispielsweise ca. 300 - 500 m ein temporärer Fahrstreifen (Verzögerungsstreifen) gebildet, auf den gewechselt werden muss, wenn das Kraftfahrzeug abfahren möchte. Da die Länge des temporären Fahrstreifens je nach Land unterschiedlich sein kann, ist die Entfernung entsprechend anzupassen (z.B. mittels GPS-Daten) oder entsprechend groß zu wählen, beispielsweise indem die Entfernung größer als die maximale Länge eines temporären Fahrstreifens gewählt wird. Hierdurch wird verhindert, dass bei einer automatisierten Fahrt aufgrund eines Rechtsfahrgebots das Kraftfahrzeug irrtümlich auf den temporären Fahrstreifen gewechselt wird und an einer nicht gewünschten Stelle abfährt.

In einer weiteren Ausführungsform werden Änderungen der Fahrbahnmarkierungen, die zur Löschung eines Fahrstreifens führen würden, ebenfalls über eine vorgegeben Entfernung beobachtet, wobei der Fahrstreifen nur gelöscht wird, wenn die geänderte Fahrbahnmarkierung über die vorgegebene Entfernung erfasst wurde. Dabei kann die Entfernung gleich der Entfernung für einen neuen Fahrstreifen gewählt werden. Vorzugsweise wird die Entfernung für das Löschen eines Fahrstreifens jedoch kürzer gewählt.

In einer weiteren Ausführungsform wird die Entfernung für das Löschen abhängig von der Art der zuvor und/oder aktuell erfassten Fahrbahnmarkierung gewählt. Beispielsweise ist die Entfernung länger, wenn zuvor eine durchgezogene Fahrbahnmarkierung erfasst wurde.

In einer weiteren Ausführungsform bleiben bei einem Fahrstreifenwechsel des Kraftfahrzeugs zuvor ermittelte Fahrstreifen gespeichert. Somit ist es möglich, dass beispielsweise ein Kraftfahrzeug weiß, dass es sich auf einer dreispurigen Autobahn befindet, obwohl es nur die Fahrstreifen der benachbarten Fahrstreifen erfassen kann, wenn es von einer rechten Fahrspur auf eine ganz linke Fahrspur gewechselt ist.

Ein bevorzugtes Anwendungsfeld des Verfahrens ist ein automatisiertes Fahren mit Fahrspurwechseln auf einer Autobahn.

Hinsichtlich der Vorrichtung wird vollinhaltlich auf die vorangegangenen Ausführungen zum Verfahren Bezug genommen.

Die Erfindung wird nachfolgend anhand eines bevorzugten Ausführungsbeispiels näher erläutert. Die Figuren zeigen:
- Fig. 1: ein schematisches Blockschaltbild einer Vorrichtung zum automatisierten Fahren eines Kraftfahrzeugs und
- Fig. 2: eine schematische Darstellung einer Autobahnabfahrt.

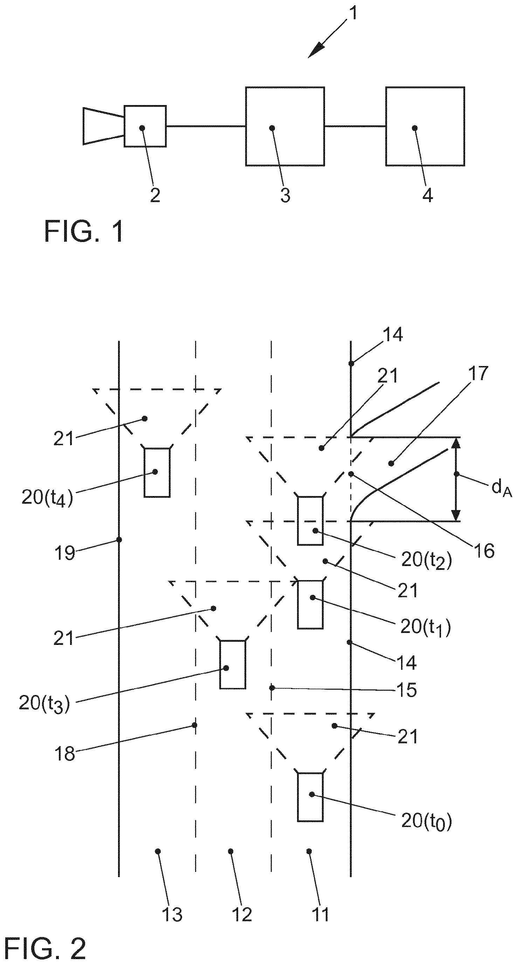

In der Fig. 1 ist schematisch ein Blockschaltbild einer Vorrichtung 1 zum automatisierten Fahren eines Kraftfahrzeugs dargestellt, die mindestens eine Kamera 2, eine Auswerteeinheit 3 und eine von der Auswerteeinheit 3 angesteuerte Aktorik 4 aufweist. Die mindestens eine Kamera 2 ist in Fahrtrichtung des Kraftfahrzeugs ausgerichtet und hat einen Erfassungsbereich, um mindestens Fahrbahnmarkierungen links und rechts vom Kraftfahrzeug zu erfassen. Diese erfassten Daten der Kamera 2 werden dann von der Auswerteeinheit 3 ausgewertet, um Fahrstreifen zu ermitteln. Dabei ist die Vorrichtung 1 derart ausgebildet, dass diese ihr Umfeld erlernt, d.h. die Vorrichtung 1 lernt selbständig aus den Daten der Kamera 2 neue Fahrstreifen an bzw. vergisst Fahrstreifen. Dabei ist die Auswerteeinheit 3 derart ausgebildet, dass Änderungen der Fahrbahnmarkierungen, die zur Ermittlung eines neuen Fahrstreifens führen würden, über eine vorgegebene Entfernung beobachtet werden, wobei der neue Fahrstreifen nur übernommen wird, wenn die geänderte Fahrbahnmarkierung über die vorgegebene Entfernung erfasst wurde. Diese vorgegebene Entfernung kann als d_{grenz1} bezeichnet werden.

Dies soll nun beispielhaft anhand von Fig. 2 näher erläutert werden. Dargestellt ist eine dreispurige Autobahn mit den drei Fahrstreifen 11, 12, 13. Ein Kraftfahrzeug 20 befindet sich zur Zeit t₀ auf der rechten Fahrspur 11. Die Kamera 2 der Vorrichtung 1 (siehe Fig. 1) erfasst die rechte durchgezogene Fahrbahnmarkierung 14 und die linke gestrichelte Fahrbahnmarkierung 15. Der Erfassungsbereich 21 der Kamera ist dabei gestrichelt dargestellt. Aus diesen Informationen kann die Auswerteeinheit 3 ableiten, dass mindestens zwei Fahrstreifen 11, 12 existieren, wobei der eigene Fahrstreifen 11 der rechte Fahrstreifen ist (wegen der durchgezogenen Linie). Wenn nun das Kraftfahrzeug 20 weiter auf dem Fahrstreifen 11 geradeaus fährt, so erfasst die Kamera 2 bzw. die Auswerteeinheit 3 zum Zeitpunkt t₁ eine Änderung der rechten Fahrbahnmarkierung 14 in eine gestrichelte Fahrbahnmarkierung 16. Die Vorrichtung 1 weiß nun noch nicht, ob es sich um einen permanenten neuen Fahrstreifen handelt oder aber um einen temporären Fahrstreifen (beispielsweise eine Autobahnabfahrt). Daher wird der neue Fahrstreifen 17 zunächst nicht übernommen. Vielmehr beobachtet die Auswerteeinheit 3 für die vorgegeben Entfernung d_{grenz1}, ob die gestrichelte Fahrbahnmarkierung 16 weiter erkannt wird. Zum Zeitpunkt t₂ hat das Kraftfahrzeug 20 eine Entfernung d_{A} kleiner als die vorgegebene Entfernung d_{grenz1} zurückgelegt und die Kamera 2 erfasst wieder die durchgezogene Fahrbahnmarkierung 14. Daher wird der neue Fahrstreifen 17 als temporärer Fahrstreifen klassifiziert und nicht übernommen.

Die vorgegebene Entfernung kann dabei abhängig von der erfassten Fahrbahnmarkierung sein, sodass beispielsweise für eine neu erfasste durchgezogene Fahrbahnmarkierung die vorgegebene Entfernung d_{grenz2} kleiner als d_{grenz1} ist.

Entsprechend kann auch das Vergessen eines Fahrstreifens (z.B. weil keine Fahrbahnmarkierung mehr erfasst wird), asymmetrisch sein, d.h. dass ein Fahrstreifen, der zuvor anhand einer durchgezogenen Fahrbahnmarkierung ermittelt wurde, länger erhalten bleibt als ein Fahrstreifen, der anhand einer gestrichelten Fahrbahnmarkierung ermittelt wurde.

Weiter ist die Auswerteeinheit 3 derart ausgebildet, dass ein erlerntes Umfeld nicht einfach vergessen wird, was anhand eines zweiten Szenarios erläutert werden soll. Das Kraftfahrzeug 20 befindet sich wieder zum Zeitpunkt t₀ auf dem rechten Fahrstreifen 11 und wechselt zum Zeitpunkt t₃ auf den mittleren Fahrstreifen 12. Die Kamera 2 erfasst nun rechts die gestrichelte Fahrbahnmarkierung 15 und links die gestrichelte Fahrbahnmarkierung 18. Somit weiß die Auswerteeinheit 3 zum Zeitpunkt t₃, dass es sich um eine dreispurige Autobahn handelt. Wechselt dann das Fahrzeug 20 zum Zeitpunkt t₄ auf den linken Fahrstreifen 13, so erfasst die Kamera 2 rechts die gestrichelte Fahrbahnmarkierung 18 und links die durchgezogene Fahrbahnmarkierung 19. Allein aus den Daten der Kamera 2 zum Zeitpunkt t₄ könnte nicht ermittelt werden, ob die Autobahn zwei- oder dreispurig ist (bzw. noch mehr Fahrstreifen aufweist). Anhand der Information zum Zeitpunkt t₃ hat sich aber die Auswerteeinheit 3 gemerkt, dass es sich um eine dreispurige Autobahn handelt. Dies kann dann bei der Trajektorienplanung berücksichtigt werden.

## Patentansprüche

1. Verfahren zum zumindest teilautomatisierten Fahren eines Kraftfahrzeugs (20), mittels mindestens einer Kamera (2) und einer Auswerteeinheit (3) zur Auswertung der von der Kamera (2) erfassten Daten, wobei mittels der Kamera (2) Fahrbahnmarkierungen (14, 15, 16, 18, 19) erfasst werden und daraus Fahrstreifen (11, 12, 13) ermittelt werden, **dadurch gekennzeichnet, dass**
Änderungen der Fahrbahnmarkierungen (14, 15, 16, 18, 19), die zur Ermittlung eines neuen Fahrstreifens (17) führen würden, über eine vorgegebene Entfernung (d_{grenz1}, d_{grenz2}) beobachtet werden, wobei der neue Fahrstreifen (17) nur übernommen wird, wenn die geänderte Fahrbahnmarkierung (14, 15, 16, 18, 19) über die vorgegebene Entfernung (d_{grenz1}, d_{grenz2}) erfasst wurde, wobei die Entfernung (d_{grenz1}, d_{grenz2}) abhängig von der Art der erfassten Fahrbahnmarkierung (14, 15, 16, 18, 19) gewählt wird, wobei die Entfernung (d_{grenz1}, d_{grenz2}) größer gewählt wird als die Länge (d_{A}) eines temporären Fahrstreifens (17).

2. Verfahren nach Anspruch 1, **dadurch gekennzeichnet, dass** die Entfernung (d_{grenz1}, d_{grenz2}) für die Übernahme eines Fahrstreifens für einen linken und einen rechten Fahrstreifen unterschiedlich gewählt wird.

3. Verfahren nach einem der vorangegangenen Ansprüche, **dadurch gekennzeichnet, dass** Änderungen der Fahrbahnmarkeirungen (14, 15, 16, 18, 19), die zur Löschung eines Fahrstreifens (11, 12, 13) führen würden, über eine vorgegebene Entfernung beobachtet werden, wobei der Fahrstreifen nur gelöscht wird, wenn die geänderte Fahrbahnmarkierung (14, 15, 16, 18, 19) über die vorgegebene Entfernung erfasst wurde.

4. Verfahren nach Anspruch 3, **dadurch gekennzeichnet, dass** die Entfernung abhängig von der Art der zuvor und/oder aktuell erfassten Fahrbahnmarkierung (14, 15, 16, 18, 19) gewählt wird.

5. Verfahren nach einem der vorangegangenen Ansprüche, **dadurch gekennzeichnet, dass** bei einem Fahrstreifenwechsel des Kraftfahrzeugs zuvor ermittelte Fahrstreifen (11, 12, 13) gespeichert bleiben.

6. Vorrichtung (1) zum automatisierten Fahren eines Kraftfahrzeugs (20), umfassend mindestens eine Kamera (2) und eine Auswerteeinheit (3) zur Auswertung der von der Kamera (2) erfassten Daten, wobei die Kamera derart ausgebildet ist, dass mittels der Kamera (2) Fahrbahnmarkierungen (14, 15, 16, 18, 19) erfasst werden und die Auswerteeinheit (3) derart ausgebildet ist, dass aus den erfassten Daten der Kamera (2) Fahrstreifen (11, 12, 13) ermittelt werden,
**dadurch gekennzeichnet, dass**
die Auswerteinheit (3) derart ausgebildet ist, dass Änderungen der Fahrbahnmarkierungen (14, 15, 16, 18, 19) die zur Ermittlung eines neuen Fahrstreifens (17) führen würden, über eine vorgegebene Entfernung (d_{grenz1}, d_{grenz2}) beobachtet werden, wobei der neue Fahrstreifen (17) nur übernommen wird, wenn die geänderte Fahrbahnmarkierung (14, 15, 16, 18, 19) über die vorgegebene Entfernung (d_{grenz1}, d_{grenz2}) erfasst wurde, wobei die Auswerteeinheit (3) derart ausgebildet ist, dass die Entfernung (d_{grenz1}, d_{grenz2}) abhängig von der Art der erfassten Fahrbahnmarkierung (14, 15, 16, 18, 19) gewählt wird, wobei
die Auswerteeinheit (3) derart ausgebildet ist, dass die Entfernung (d_{grenz1}, d_{grenz2}) größer gewählt wird als die Länge (d_{A}) eines temporären Fahrstreifens (17).

7. Vorrichtung nach Anspruch 6, **dadurch gekennzeichnet, dass** die Auswerteeinheit (3) derart ausgebildet ist, dass die Entfernung (d_{grenz1}, d_{grenz2}) für die Übernahme eines Fahrstreifens für einen linken und einen rechten Fahrstreifen unterschiedlich gewählt wird.

## Claims

1. A method for the at least partially automated driving of a motor vehicle (20) by means of at least one camera (2) and an evaluation unit (3) for evaluating the data detected by the camera (2), wherein road markings (14, 15, 16, 18, 19) are detected by means of the camera (2), and lanes (11, 12, 13) are determined therefrom,
**characterized in that**
changes in the road markings (14, 15, 16, 18, 19), which would result in the determination of a new lane (17), are observed over a predetermined distance (dₗᵢₘᵢₜ₁, dₗᵢₘᵢₜ₂), wherein the new lane (17) is only adopted when the changed road marking (14, 15, 16, 18, 19) has been detected over the predetermined distance (dₗᵢₘᵢₜ₁, dₗᵢₘᵢₜ₂), wherein the distance (dₗᵢₘᵢₜ₁, dₗᵢₘᵢₜ₂) is selected depending on the type of the detected road marking (14, 15, 16, 18, 19), wherein
the distance (dₗᵢₘᵢₜ₁, dₗᵢₘᵢₜ₂) is selected to be greater than the length (d_{A}) of a temporary lane (17).

2. The method according to claim 1, **characterized in that** the distance (dₗᵢₘᵢₜ₁, dₗᵢₘᵢₜ₂) for adopting a lane is selected to be different for a left lane and a right lane.

3. The method according to any of the preceding claims, **characterized in that** changes in the road markings (14, 15, 16, 18, 19) which would result in the deletion of a lane (11, 12, 13) are observed over a predetermined distance, wherein the lane is only deleted when the changed road marking (14, 15, 16, 18, 19) has been detected over the predetermined distance.

4. The method according to claim 3, **characterized in that** the distance is selected depending on the type of the previously and/or currently detected road marking (14, 15, 16, 18, 19).

5. The method according to any of the preceding claims, **characterized in that,** when the motor vehicle changes lanes, previously determined lanes (11, 12, 13) remain stored.

6. A device (1) for the automated driving of a motor vehicle (20), comprising at least one camera (2) and an evaluation unit (3) for evaluating the data detected by the camera (2), wherein the camera is designed such that road markings (14, 15, 16, 18, 19) are detected by means of the camera (2), and the evaluation unit (3) is designed such that lanes (11, 12, 13) are determined from the acquired data of the camera (2),
**characterized in that**
the evaluation unit (3) is designed such that changes in the road markings (14, 15, 16, 18, 19) which would result in the determination of a new lane (17) are observed over a predetermined distance (dₗᵢₘᵢₜ₁, dₗᵢₘᵢₜ₂), wherein the new lane (17) is only adopted when the changed road marking (14, 15, 16, 18, 19) has been detected over the predetermined distance (dₗᵢₘᵢₜ₁, dₗᵢₘᵢₜ₂), wherein the evaluation unit (3) is designed such that the distance (dₗᵢₘᵢₜ₁, dₗᵢₘᵢₜ₂) is selected depending on the type of the detected road marking (14, 15, 16, 18, 19), wherein
the evaluation unit (3) is designed such that the distance (dₗᵢₘᵢₜ₁, dₗᵢₘᵢₜ₂) is selected to be greater than the length (d_{A}) of a temporary lane (17).

7. The device according to claim 6, **characterized in that** the evaluation unit (3) is designed such that the distance (dₗᵢₘᵢₜ₁, dₗᵢₘᵢₜ₂) for accepting a lane is selected to be different for a left and a right lane.

## Revendications

1. Procédé de conduite au moins partiellement automatisée d'un véhicule automobile (20), au moyen d'au moins une caméra (2) et d'une unité de traitement (3) pour le traitement de données détectées par la caméra (2), dans lequel, au moyen de la caméra (2), des marquages routiers (14, 15, 16, 18, 19) sont détectés et, à partir de ceux-ci, des voies de circulation (11, 12, 13) sont déterminées,
**caractérisé en ce que**
des modifications des marquages routiers (14, 15, 16, 18, 19), qui entraînent la détermination d'une nouvelle voie de circulation (17), sont observées par le biais d'une distance prédéfinie (d_{grenz1}, d_{grenz2}), dans lequel la nouvelle voie de circulation (17) n'est prise en charge que lorsque le marquage routier modifié (14, 15, 16, 18, 19) est détecté par le biais de la distance prédéfinie (d_{grenz1}, d_{grenz2}), dans lequel la distance (d_{grenz1}, d_{grenz2}) est sélectionnée en fonction du type de marquage routier détecté (14, 15, 16, 18, 19), dans lequel
la distance (d_{grenz1}, d_{grenz2}) est sélectionnée supérieure à la longueur (d_{A}) d'une voie de circulation temporaire (17).

2. Procédé selon la revendication 1, **caractérisé en ce que** la distance (d_{grenz1}, d_{grenz2}) pour la prise en charge d'une voie de circulation est sélectionnée différemment pour une voie de circulation gauche et une voie de circulation droite.

3. Procédé selon l'une quelconque des revendications précédentes, **caractérisé en ce que** les modifications des marquages routiers (14, 15, 16, 18, 19), qui entraînent la suppression d'une voie de circulation (11, 12, 13), sont observées par le biais d'une distance prédéfinie, dans lequel la voie de circulation n'est supprimée que lorsque le marquage routier modifié (14, 15, 16, 18, 19) a été détecté par le biais de la distance prédéfinie.

4. Procédé selon la revendication 3, **caractérisé en ce que** la distance est sélectionnée en fonction du type du marquage routier détecté précédemment et/ou actuellement (14, 15, 16, 18, 19).

5. Procédé selon l'une quelconque des revendications précédentes, **caractérisé en ce que** lors d'un changement de voie de circulation du véhicule automobile, les voies de circulation (11, 12, 13) déterminées précédemment restent mémorisées.

6. Dispositif (1) pour la conduite au moins partiellement automatisée d'un véhicule automobile (20), comprenant au moins une caméra (2) et une unité de traitement (3) pour le traitement de données détectées par la caméra (2), dans lequel la caméra est conçue de sorte qu'au moyen de la caméra (2), des marquages routiers (14, 15, 16, 18, 19) soient détectés et l'unité de traitement (3) est conçue de sorte que, à partir des données détectées de la caméra (2), des voies de circulation (11, 12, 13) soient déterminées,
**caractérisé en ce que**
l'unité de traitement (3) est conçue de sorte que des modifications des marquages routiers (14, 15, 16, 18, 19), qui entraînent la détermination d'une nouvelle voie de circulation (17), soient observées par le biais d'une distance prédéfinie (d_{grenz1}, d_{grenz2}), dans lequel la nouvelle voie de circulation (17) n'est prise en charge que lorsque le marquage routier modifié (14, 15, 16, 18, 19) est détecté par le biais de la distance prédéfinie (d_{grenz1}, d_{grenz2}), dans lequel l'unité de traitement (3) est conçue de sorte que la distance (d_{grenz1}, d_{grenz2}) soit sélectionnée en fonction du type de marquage routier détecté (14, 15, 16, 18, 19), dans lequel
l'unité de traitement (3) est conçue de sorte que la distance (d_{grenz1}, d_{grenz2}) soit sélectionnée supérieure à la longueur (d_{A}) d'une voie de circulation temporaire (17).

7. Dispositif selon la revendication 6, **caractérisé en ce que** l'unité de traitement (3) est conçue de sorte que la distance (d_{grenz1}, d_{grenz2}) pour la prise en charge d'une voie de circulation soit sélectionnée différemment pour une voie de circulation gauche et une voie de circulation droite.
